# EUROPEAN PATENT SPECIFICATION

(11) **EP 4 335 729 B1**
(45) Date of publication and mention of the grant of the patent: **04.11.2026**
(21) Application number: 22799042.1
(22) Date of filing: 26.04.2022
(51) Int. Cl.: B62D 25/20, B62D 25/02, B62D 29/00, B62D 21/15, B60K 1/04

(54) **VEHICLE BODY**
FAHRZEUGAUFBAU
CARROSSERIE DE VÉHICULE

(30) Priority: 07.05.2021 KR 20210059017
(43) Date of publication of application: 13.03.2024
(73) Proprietor: POSCO Co., Ltd, Pohang-si, Gyeongsangbuk-do 37859 (KR)
(72) Inventor: LEE, Hong-Woo, Incheon 21985 (KR); KIM, Jaehyun, Incheon 21985 (KR); SEOK, Dong-Yoon, Seoul 06194 (KR)
(74) Representative: Meissner Bolte Partnerschaft mbB
(86) International application number: PCT/KR2022/005942
(87) International publication number: WO 2022/234999

(56) References cited:
- EP-A1- 3 805 078
- EP-A1- 3 805 078
- EP-B1- 2 336 007
- EP-B1- 3 554 923
- WO-A1-2021/060660
- CA-A1- 3 139 260
- CN-A- 101 913 380
- CN-A- 111 661 171
- JP-A- 2005 067 445
- JP-B2- 6 225 653
- KR-A- 20190 029 954
- KR-A- 20190 029 954
- KR-A- 20190 068 592
- KR-A- 20210 036 182
- KR-B1- 101 482 462
- US-A- 5 613 727
- US-A- 5 921 618
- US-A1- 2009 146 457
- US-A1- 2020 140 017
- US-B2- 10 286 956
- US-B2- 10 513 295
- US-B2- 10 723 391
- US-B2- 8 308 227

## Description

### Technical Field

The present disclosure relates to a vehicle body capable of improving response performance in a side collision of a vehicle.

### Background Art

To protect against impacts exerted on a side surface of a vehicle, a vehicle body includes a side sill and a cross member. Among the cross members, for example, a seat cross member is a member for fixing a frame of a seat, but may also perform a role of supporting a collision load exerted on the side surface thereof.

In the case of mounting a high-capacity battery such as an electric vehicle, or the like, a space below a floor should be secured to be as wide as possible. In this case, an installation space for a member capable of absorbing collision energy is insufficient, making it vulnerable to side collisions.

In order to solve this problem, a reinforcing member is additionally introduced into the side sill to improve energy absorption and at the same time, by reinforcing the cross member, an amount of inflow into a room of the side sill is suppressed as much as possible.

Therefore, it is necessary to secure a reinforced connection structure of a side sill and a cross member connected to the side sill. In particular, when applying ultra-high strength steel of, for example, 780 MPa or more, a shape of the connection structure between the cross member and the side sill is inevitably very limited due to low formability.

(Patent Document 1) JP Hei 11-208520 A

### Summary of Invention

### Technical Problem

An aspect of the present disclosure is to provide a vehicle body capable of minimizing penetration of a collision load into a passenger space and a battery space during a side collision of a vehicle by improving a connection structure between a side sill and a cross member.

### Solution to Problem

The present disclosure relates to a vehicle body according to claim 1.

### Advantageous Effects of Invention

As set forth above, according to the present disclosure, during a side collision of a vehicle, energy may be absorbed by a side sill and a reinforcing member therein, and a load may be directly transmitted to the cross member through the reinforcing member, thereby minimizing penetration of collision load into a passenger space and a battery space.

In addition, according to the present disclosure, by strengthening a connection structure between the side sill and the cross member, the cross member can receive and support a high load during a side collision of the vehicle, and eventually obtain an effect of increasing rigidity of the vehicle body.

Furthermore, according to the present disclosure, when manufacturing a cross member with, for example, 780 MPa or more of ultra-high strength steel, a flange of an end portion may be formed without notches due to the inclined shape of the end portion, and a weight of the vehicle body, can be reduced.

### Brief description of drawings

FIG. 1 is a perspective view illustrating a vehicle body according to an embodiment of the present disclosure.
FIG. 2 is an enlarged cross-sectional view of portion A of FIG. 1.
FIG. 3 is an enlarged perspective view of the cross member illustrated in FIG. 1.
FIG. 4 (a) is a cross-sectional view taken along line A-A' of FIG. 3, FIG. 4(b) is a cross-sectional view taken along line B-B', and FIG. 4(c) is a cross-sectional view taken along line C-C'.

### Mode for Invention

An aspect of the present disclosure is to provide a vehicle body that can not only effectively support a collision load exerted on a side surface of a vehicle, but also increase connection rigidity and reduce the weight, by proposing an organic connection relationship between a side sill, a cross member, and a reinforcing member inside the side sill.

Hereinafter, the present disclosure is explained in detail through exemplary drawings. In adding reference numerals to the components of each drawing, it should be noted that the same components have the same numerals as much as possible even if they are displayed on different drawings.

Terms used in relation to directions in the description below include "front", "side", "rear", "front", "back", "above", "below", "left and right", "inner", "outer", "inner side", "outer side", and the like are defined based on the vehicle or vehicle body.

In the present specification, a vehicle refers to various vehicles for moving an object to be transported, such as people, animals, objects, or the like, from a starting point to a destination. These vehicles are not limited to those that drive on roads or tracks.

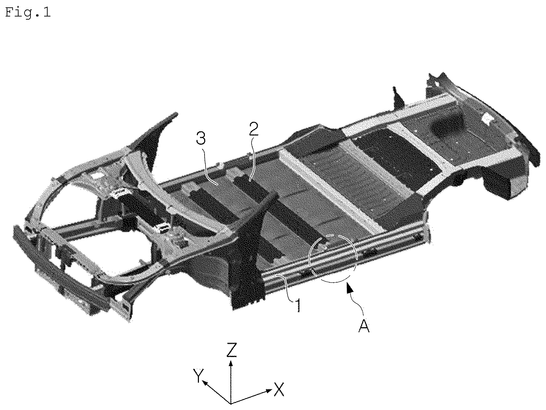

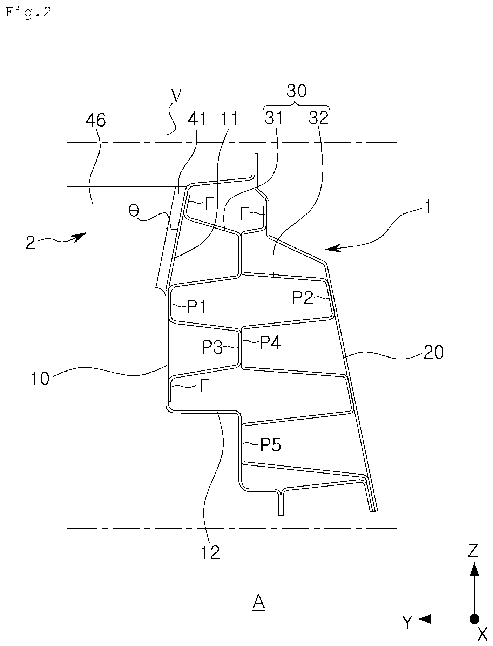

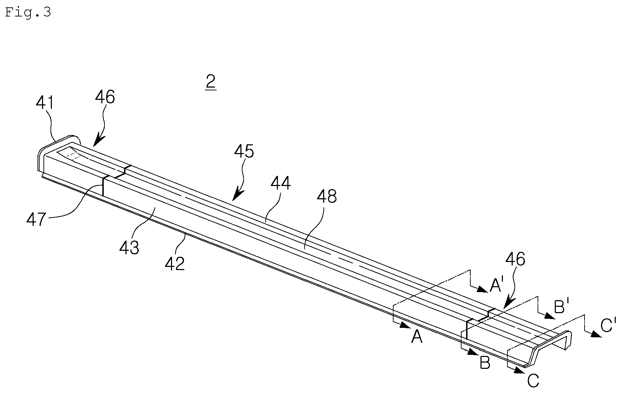

FIG. 1 is a perspective view illustrating a vehicle body according to an embodiment of the present disclosure. FIG. 2 is an enlarged cross-sectional view of part A of FIG. 1, and FIG. 3 is an enlarged perspective view of a cross member illustrated in FIG. 1.

A skeletal structure of the vehicle body may include a side member extending in a lengthwise direction (X) of the vehicle and forming a side surface of the vehicle body, and a plurality of cross members extending in a widthwise direction (Y) of the vehicle and coupled to both side members.

The plurality of cross members may be coupled to a side member at intervals from each other from a front end to a rear end of the vehicle body, and among the plurality of cross members 2, for example, a seat cross member may be used to fix a frame of a seat.

The side member may include a side sill 1 protecting a passenger space in a side collision and forming an exterior of a side of the vehicle.

As described above, the vehicle body has a shape in which a plurality of members are crossed and coupled in a lengthwise direction (X) and widthwise direction (Y) of the vehicle. Depending on connection rigidity between the crossed members, energy transmitted during a collision is evenly distributed throughout the vehicle body or, on the contrary, is broken, resulting in serious deformation and damage with the concentration of the collision energy, resulting in serious injury to passengers.

Accordingly, the connection rigidity between the crossed members becomes a very important factor in securing the overall rigidity of the vehicle body and the safety of passenger.

For example, a battery case (not shown) may be mounted in the middle of the vehicle body. To this end, a battery space in which a battery case is mounted may be provided in the vehicle body. The battery case may include a plurality of battery cells capable of charging and discharging.

Above the battery case, a floor panel 3 partitioning a passenger space in which passengers board may be installed. A plurality of cross members 2, such as seat cross members for example, can be fixed to the floor panel.

As illustrated in FIGS. 1 and 2, a vehicle body according to an embodiment of the present disclosure may include a side sill 1 and a cross member 2.

The side sill 1 may be formed and disposed to extend from both lower left and right sides of the vehicle body along a longitudinal direction X of the vehicle.

For example, the side sill 1 may include an inner panel 10 and an outer panel 20, and the inner panel and the outer panel may be welded to each other in a lower end portion or an upper end portion of the side sill, so that the side sill may be integrally coupled. The inner panel may be coupled to a floor panel 3, so that the side sill may be installed on the vehicle body.

The side sill 1 may be formed of, for example, a metal material such as steel, and may be formed by forming using a press, bending, roll forming, or a combination thereof.

In the side sill 1, collision performance of the side sill may be secured by adjusting a material of a sheet material forming the side sill and a strength or thickness of the material. For example, by employing ultra-high strength steel of 780 MPa or more, an optimal combination for reducing a weight of the side sill can be achieved.

More specifically, the side sill 1 may be formed of a sheet material such as 1470 Martensitic (MART) steel or 1470 Hot Press Forming (HPF) steel having a thickness of about 1.4 mm to 1.6 mm produced by the present applicant.

Here, 1470 MART steel is a type of steel having a tensile strength of 1,470 MPa or more and a yield strength of 1,050 MPa or more, to improve collision safety, and 1470 HPF steel is a type of steel that has a tensile strength of 1,470 MPa or more and at the same time, and can freely form shape of parts while obtaining a tensile strength of 1,470 MPa or more.

The inner panel 10 may include an inclined surface 11 formed so that an inclination thereof increases from an inside to an outside. The inclined surface may be formed in a position higher than half the height of the inner panel. The inclined surface may be inclined at an angle θ of about 8 to 20 degrees with respect to a vertical line V extending in the height direction Z of the vehicle.

In addition, the inner panel 10 may include a stepped portion 12 extending from the inside to the outside and is bent. The stepped portion may be formed in a position lower than half the height of the inner panel.

The side sill 1 serves as an important body structure for responding to front, rear and side collisions of a vehicle. Optionally, since buckling easily occurs in various collision conditions when an inside of the side sill is empty, various types of reinforcing means may be supplemented inside the side sill.

A side sill 1 of a vehicle body according to an embodiment of the present disclosure may include a reinforcing member 30 disposed between an inner panel 10 and an outer panel 20. For example, the reinforcing member may be formed by bending a single sheet material.

After repeating a method of being extended to a predetermined length and then bent, to form a desired number of flat surfaces, both ends of the sheet material may be bent clockwise or counterclockwise, respectively, to form a flange.

One end portion of the reinforcing member 30, that is, an upper flange may be coupled to an inner surface of the inclined surface 11 formed on the inner panel 10. The upper flange may be coupled to the inner surface of the inclined surface by welding such as spot welding, laser welding, or arc welding using carbon dioxide.

The other end portion of the reinforcing member 30, that is, a lower flange, may be coupled to an inner surface of the inner panel 10. The lower flange may be coupled to the inner surface of the inner panel by welding such as spot welding, laser welding, or arc welding using carbon dioxide.

The remaining flat surfaces of the reinforcing member 30 in contact with the inner panel 10 or the outer panel 20 may be fixed by adhesive, welding, or the like.

The reinforcing member 30 may be formed of, for example, a metal material such as steel, and may be formed by forming or bending using a press, roll forming, or a combination thereof.

The reinforcing member 30 may be formed of a sheet material such as 1180 transformation induced plasticity (TRIP) steel having a thickness of about 0.9 mm to 1.1 mm produced by the present applicant.

Here, the 1180 TRIP steel is a type of steel having improved elongation while guaranteeing a tensile strength of 1180 MPa or more and a yield strength of 850 MPa or more.

The reinforcing member 30 may include a first reinforcing member 31 coupled to the inner panel 10 and a second reinforcing member 32 coupled to the outer panel 20. As illustrated in FIG. 2, each of the first reinforcing member and the second reinforcing member may be formed by meanderingly bending a single sheet material.

After repeating a method of extended to a predetermined length and then bent to form a desired number of flat surfaces, both ends of the sheet material may be bent clockwise or counterclockwise, respectively, to form a flange.

The first reinforcing member 31 and the second reinforcing member 32 may have a length sufficient to almost fill an inside of the side sill 1 in the longitudinal direction X of the vehicle.

By having a shape in which the first reinforcing member 31 and the second reinforcing member 32 are bent several times, it is possible to secure not only collision energy acting on a side of the side sill 1, but also rigidity against collision energy acting in front and rear directions.

The first reinforcing member 31 and the second reinforcing member 32 may partially be into contact with each other and be fixed. To this end, the first reinforcing member and the second reinforcing member may have a length in the width direction Y of the vehicle capable of bisecting a space between the inner panel 10 and the outer panel 20.

In addition, a contact surface on which the first reinforcing member 31 and the second reinforcing member 32 are in contact with each other may be located to extend to be parallel to a vertical line V extending in the height direction Z of the vehicle so that the collision load therebetween can be accurately transmitted and responded thereto.

A flat surface P1 and a flange F of the first reinforcing member 31 may be coupled to the inner panel 10 by welding such as spot welding, laser welding, or arc welding using carbon dioxide. Accordingly, a welding portion may be formed between the flat surface P1 and the flange.

One end of the first reinforcing member 31, that is, the upper flange F may be coupled to an inner surface of the inclined surface 11 formed on the inner panel 10.

The other end of the first reinforcing member 31, that is, the lower flange F may be coupled to an inner surface of the inner panel 10.

A flat surface P2 and a flange F of the second reinforcing member 32 may be coupled to the inner panel 10 by welding such as spot welding, laser welding, or arc welding using carbon dioxide. Accordingly, a welding portion may be formed between the flat surface P2 and the flange.

In addition, when the first reinforcing member 31 and the second reinforcing member 32 are in contact with each other, an adhesive may be interposed between a flat surface P3 of the first reinforcing member and a flat surface P4 of the second reinforcing member and bonded to each other, so that an adhesive portion may be formed.

In addition, a flat surface P5 of the second reinforcing member 32 may be fixed to a wall surface extending in the height direction Z of the vehicle from the stepped portion 12 of the inner panel 10. To this end, an adhesive may be interposed between the flat surface P5 of the second reinforcing member and the wall surface of the stepped portion to be bonded to each other.

The reinforcing member constructed and disposed as described above may accurately transfer the collision load received by the outer panel 20 of the side sill 1 to the inner panel 10, and then to the cross member 2.

The cross member 2 may be formed and disposed to extend in a width direction Y of the vehicle and connect the side sills 1 on both sides.

The cross member 2 may be coupled to one side surface of the side sill 1. More specifically, an end of the cross member may be formed to be inclined to correspond to an inclined surface 11 of the inner panel 10 of the side sill and coupled to an outer surface of the inclined surface.

A flange surface 41 may be formed at both ends located at both ends of a length portion of the cross member 2 without a notch.

If the notch is applied to a first flange surface, since the first flange surface in contact with and welded to the side sill 1 is small, there is a disadvantage in that a load transmitted to the cross member 2 is also relatively small. Therefore, it is much preferred that the first flange surface 41 is formed without notches.

The first flange surface 41 may be inclined to correspond to the inclined surface 11 of the inner panel 10 of the side sill 1. The first flange surface may be coupled to the outer surface of the inclined surface of the inner panel by welding such as spot welding, laser welding, or arc welding using carbon dioxide.

The cross member 2 may be provided, for example, as a tubular member having a hollow portion, hollow inside and having a polygonal cross-sectional shape of square or more, but is not necessarily limited thereto, and may be formed of a member formed of a single sheet material having a cross-sectional shape, bent or curved to have an open cross section, or a member obtained by bonding two or more sheet materials.

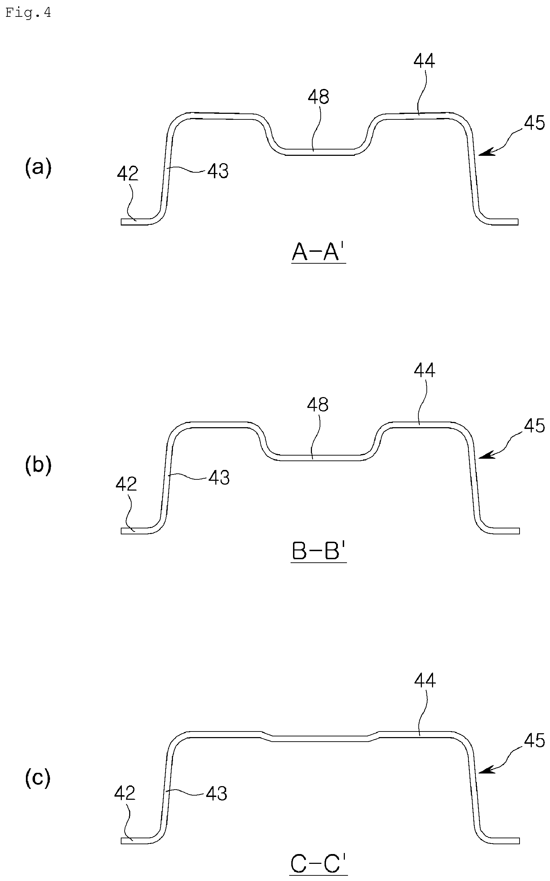

As illustrated in FIGS. 3 and 4, a cross-section of the cross member 2 of the vehicle body according to an embodiment of the present invention includes a pair of wall surfaces 43 extending in a height direction Z of the vehicle, and a connection surface 44 connecting one end of the wall surfaces. In addition, the other end of the wall surface may be bent to form a second flange surface 42 for coupling the cross member to a floor panel 3. As a result, the cross member may have a hat-shaped cross-sectional shape.

The cross member 2 may be formed from a single sheet material. For example, by employing a sheet material formed of ultra-high-strength steel of 780 MPa or more, an optimal combination for weight reduction as well as added rigidity may be achieved.

Alternatively, in the cross member 2, an intermediate portion 45 and both ends 46 may be formed of different materials from each other.

The intermediate portion 45 of the cross member 2 may be formed of a sheet material such as 1470 MART steel having a thickness of about 1.5 mm to 1.6 mm produced by the present applicant.

Both ends of the cross member 2 may be formed of a sheet material such as 1180 TRIP steel having a thickness of about 1.8 mm to 1.9 mm or 1470 HPF steel having a thickness of about 1.8 mm to 1.9 mm produced by the present applicant.

As described above, the intermediate portion 45 of the cross member 2 may have strength higher than that of both ends 46 thereof. The intermediate portion of the cross member may have a thickness less than or equal to the thickness of both ends thereof.

The intermediate portion 45 of the cross member 2 may be formed by, for example, roll forming, and both ends 36 may be formed by, for example, press forming. Thereafter, the intermediate portion and both ends may be coupled to each other by welding, to constitute an integral cross member. In FIG. 3, reference numeral 47 denotes a welding line.

Additionally, a bead portion 48 extending in a lengthwise direction of the cross member may be formed on a connection surface 44 of the cross member 2. The bead portion may be formed as a concave channel or a convex protrusion.

A depth or height of the bead portion 48, that is, a depth of the channel or a height of the protrusion may vary, and the depth of the channel may become shallow or the height of the protrusion may decrease toward an end of the cross member 2.

Specifically, in the intermediate portion 45 of the cross member 2, the bead portion 48 formed on the connection surface 44 has a certain depth or height (see FIG. 4(a)).

At the end 46 of the cross member 2, the depth or height of the bead portion 48 vary, and the depth of the channel becomes shallow as a distance from the intermediate portion 45 of the cross member 2 at the end 46 thereof increases, the depth of the channel becomes shallow or the height of the protrusion decreases (see (b) and (c) of FIG. 4).

Accordingly, the connection surface 44 may have an approximately M-shaped cross-sectional shape in the intermediate portion 45 of the cross member 2, and the connection surface is gradually flattened to have a simple hat-shaped cross-sectional shape at both ends 46.

By forming the bead portion 48 as described above, the intermediate portion 45 of the cross member 2 can reinforce rigidity against the collision load exerted in the lengthwise direction of the cross member, and both ends 46 have no bends on the connection surface 44, so that a first flange surface 41 without notches may be easily formed.

Furthermore, as described above, the end portion 46 of the cross member 2 and the first flange surface 41 may be formed to be inclined at an angle (θ) of about 8 to 20 degrees with respect to a vertical line V extending in a height direction Z of the vehicle.

When the angle (θ) of the inclined surface 11 is less than 8 degrees, it is difficult to form the first flange surface 41 at the end 46 of the cross member 2 without a notch, and when the angle (θ) of exceeds 20 degrees, it is not possible to accurately transfer a collision load to the cross member during a side collision of the vehicle, and it is disadvantageous for the reinforcing member 30 or the first reinforcing member 31 to support the collision load.

Accordingly, the end portion 46 of the cross member 2 can have a continuous first flange surface 41 without a notch even though it is formed of ultra-high strength steel of 780 MPa or more.

The inclined first flange surface 41 at the end 46 of the cross member 2 and the inclined surface 11 formed on the inner panel 10 of the side sill 1 are inclined at the same angle θ as each other, so that a contact thereof with each other may be perfectly matched.

As described above, the end 46 of the cross member 2 is in perfect contact with and coupled to the inner panel 10 of the side sill 1, so that the side sill can reliably transfer the collision load to the cross member.

After the cross member 2 is coupled to both side sills 1, it is possible to reduce the weight of the vehicle body while maintaining torsional or bending rigidity of the vehicle body.

The above description is merely an example of the technical idea of the present disclosure, and various modifications and variations can be made to those skilled in the art without departing from the essential characteristics of the present disclosure, as defined by the appended claims.

While example embodiments have been shown and described above, it will be apparent to those skilled in the art that modifications and variations could be made without departing from the scope of the present disclosure as defined by the appended claims.

## Claims

1. A vehicle body, comprising: a side sill (1) extending in a lengthwise direction of a vehicle; and a cross member (2) extending in a widthwise direction of the vehicle, an end thereof being coupled to the side sill, wherein the side sill includes an inner panel (10); an outer panel (20) coupled to the inner panel; and a reinforcing member (32) disposed between the inner panel and the outer panel, wherein the inner panel includes an inclined surface (11) formed to have an ascending slope from an inner side to an outer side of the vehicle, an end of the cross member is formed to have a slope corresponding to the inclined surface and is coupled to an outer surface of the inclined surface, and one end of the reinforcing member is coupled to an inner surface of the inclined surface, wherein the reinforcing member comprises a first reinforcing member (31) coupled to the inner panel; and a second reinforcing member (32) coupled to the outer panel, wherein one end of the first reinforcing member is coupled to the inner surface of the inclined surface, wherein the first reinforcing member and the second reinforcing member are partially in contact with each other and are fixed.

2. The vehicle body of claim 1, wherein the inclined surface is inclined at an angle (θ) between 8 to 20 degrees with a vertical line (V) extending in a height direction (Z) of the vehicle.

3. The vehicle body of claim 1 or claim2, wherein the reinforcing member (32) is formed by bending a single sheet material.

4. The vehicle body of any one of claims 1 to 3, wherein a contact surface on which the first reinforcing member (31) and the second reinforcing member (32) are in contact with each other is located extending to be parallel to the vertical line (V) extending in the height direction (Z) of the vehicle.

5. The vehicle body of any one of claims 1 to 4, wherein an end of the cross member (2) comprises a first flange surface (41) formed without notches.

6. The vehicle body of any one of claims 1 to 5, wherein the first flange surface (41) is inclined at the same angle as the inclined surface (11), and is coupled to be in contact with an outer surface of the inclined surface.

7. The vehicle body of any one of claims 1 to 6, wherein the cross member (2) comprises a pair of wall surfaces (43) extending in a height direction (Z) of the vehicle, and a connection surface (44) connecting one end of the pair of wall surfaces, wherein the other end of the wall surface is bent to form a second flange surface (42).

8. The vehicle body of claim 7, wherein a bead portion (48) formed to extend in a lengthwise direction of the cross member (2) is disposed on the connection surface (44) of the cross member, wherein a depth or height of the bead portion is formed to be variable.

9. The vehicle body of any one of claims 1 to 8, wherein an intermediate portion (45) and both ends of the cross member (2) are formed of sheet materials of different materials and then coupled to each other by welding.

10. The vehicle body of claim 9, wherein the intermediate portion (45) of the cross member (2) has a strength equal to or greater than the strength of both ends, and has a thickness less than or equal to the thickness of both ends.

11. The vehicle body of claim 9 or claim 10, wherein in the intermediate portion (45), the bead portion (48) has a certain depth or height, and
at the both ends, the depth of the bead portion becomes shallower or the height of the bead portion becomes lower as the distance thereof from the intermediate portion increases.

12. The vehicle body of any one of claims 1 to 11, wherein the side sill (1) and the cross member (2) are made of a sheet material formed of ultra-high strength steel of 780 MPa or more.

## Patentansprüche

1. Fahrzeugkarosserie, umfassend: einen Seitenschweller (1), der sich in einer Längsrichtung eines Fahrzeugs erstreckt; und ein Querelement (2), das sich in einer Breitenrichtung des Fahrzeugs erstreckt, wobei ein Ende davon an den Seitenschweller gekoppelt ist, wobei der Seitenschweller eine Innenplatte (10); eine Außenplatte (20), die an die Innenplatte gekoppelt ist; und ein Verstärkungselement (32), das zwischen der Innenplatte und der Außenplatte angeordnet ist, beinhaltet, wobei die Innenplatte eine geneigte Fläche (11) beinhaltet, die so gebildet ist, dass sie einen Anstieg von einer Innenseite zu einer Außenseite des Fahrzeugs aufweist, ein Ende des Querelements so gebildet ist, dass es eine Neigung aufweist, die der geneigten Fläche entspricht, und an eine Außenfläche der geneigten Fläche gekoppelt ist, und ein Ende des Verstärkungselements an eine Innenfläche der geneigten Fläche gekoppelt ist, wobei das Verstärkungselement ein erstes Verstärkungselement (31), das an die Innenplatte gekoppelt ist; und ein zweites Verstärkungselement (32), das an die Außenplatte gekoppelt ist, umfasst, wobei ein Ende des ersten Verstärkungselements an die Innenfläche der geneigten Fläche gekoppelt ist, wobei das erste Verstärkungselement und das zweite Verstärkungselement teilweise miteinander in Kontakt stehen und fixiert sind.

2. Fahrzeugkarosserie nach Anspruch 1, wobei die geneigte Fläche in einem Winkel (θ) zwischen 8 und 20 Grad mit einer vertikalen Linie (V), die sich in einer Höhenrichtung (Z) des Fahrzeugs erstreckt, geneigt ist.

3. Fahrzeugkarosserie nach Anspruch 1 oder Anspruch 2, wobei das Verstärkungselement (32) durch Biegen eines einzelnen Blechmaterials gebildet ist.

4. Fahrzeugkarosserie nach einem der Ansprüche 1 bis 3, wobei eine Kontaktfläche, auf der das erste Verstärkungselement (31) und das zweite Verstärkungselement (32) miteinander in Kontakt stehen, so positioniert ist, dass sie sich parallel zu der vertikalen Linie (V) erstreckt, die sich in der Höhenrichtung (Z) des Fahrzeugs erstreckt.

5. Fahrzeugkarosserie nach einem der Ansprüche 1 bis 4, wobei ein Ende des Querelements (2) eine erste Flanschfläche (41) umfasst, die ohne Kerben gebildet ist.

6. Fahrzeugkarosserie nach einem der Ansprüche 1 bis 5, wobei die erste Flanschfläche (41) in dem gleichen Winkel wie die geneigte Fläche (11) geneigt ist und so gekoppelt ist, dass sie mit einer Außenfläche der geneigten Fläche in Kontakt steht.

7. Fahrzeugkarosserie nach einem der Ansprüche 1 bis 6, wobei das Querelement (2) ein Paar Wandflächen (43), das sich in einer Höhenrichtung (Z) des Fahrzeugs erstreckt, und eine Verbindungsfläche (44), die ein Ende des Paares von Wandflächen verbindet, umfasst, wobei das andere Ende der Wandfläche so gebogen ist, dass es eine zweite Flanschfläche (42) bildet.

8. Fahrzeugkarosserie nach Anspruch 7, wobei ein Wulstabschnitt (48), der so gebildet ist, dass er sich in einer Längsrichtung des Querelements (2) erstreckt, auf der Verbindungsfläche (44) des Querelements angeordnet ist, wobei eine Tiefe oder Höhe des Wulstabschnitts so gebildet ist, dass sie variabel ist.

9. Fahrzeugkarosserie nach einem der Ansprüche 1 bis 8, wobei ein Zwischenabschnitt (45) und beide Enden des Querelements (2) aus Blechmaterialien verschiedener Materialien gebildet sind und dann durch Schweißen aneinandergekoppelt werden.

10. Fahrzeugkarosserie nach Anspruch 9, wobei der Zwischenabschnitt (45) des Querelements (2) eine Festigkeit aufweist, die gleich oder größer als die Festigkeit beider Enden ist, und eine Dicke aufweist, die kleiner oder gleich der Dicke beider Enden ist.

11. Fahrzeugkarosserie nach Anspruch 9 oder Anspruch 10, wobei in dem Zwischenabschnitt (45) der Wulstabschnitt (48) eine bestimmte Tiefe oder Höhe aufweist und an den beiden Enden die Tiefe des Wulstabschnitts flacher wird oder die Höhe des Wulstabschnitts niedriger wird, wenn dessen Abstand von dem Zwischenabschnitt zunimmt.

12. Fahrzeugkarosserie nach einem der Ansprüche 1 bis 11, wobei der Seitenschweller (1) und das Querelement (2) aus einem Blechmaterial bestehen, das aus einem ultrahochfesten Stahl mit 780 MPa oder mehr gebildet ist.

## Revendications

1. Caisse de véhicule, comprenant : un bas de caisse (1) s'étendant dans une direction de la longueur d'un véhicule ; et une traverse (2) s'étendant dans une direction de la largeur du véhicule, dont une extrémité est couplée au bas de caisse, dans laquelle le bas de caisse comporte un panneau intérieur (10) ; un panneau extérieur (20) couplé au panneau intérieur ; et un organe de renfort (32) disposé entre le panneau intérieur et le panneau extérieur, dans laquelle le panneau intérieur comporte une surface inclinée (11) formée de manière à présenter une pente ascendante depuis un côté intérieur vers un côté extérieur du véhicule, une extrémité de la traverse est formée de manière à présenter une pente correspondant à la surface inclinée et est couplée à une surface extérieure de la surface inclinée, et une extrémité de l'organe de renfort est couplée à une surface intérieure de la surface inclinée, dans laquelle l'organe de renfort comprend un premier organe de renfort (31) couplé au panneau intérieur ; et un deuxième organe de renfort (32) couplé au panneau extérieur, dans laquelle une extrémité du premier organe de renfort est couplée à la surface intérieure de la surface inclinée, dans laquelle le premier organe de renfort et le deuxième organe de renfort sont partiellement en contact l'un avec l'autre et sont fixes.

2. Caisse de véhicule selon la revendication 1, dans laquelle la surface inclinée est inclinée selon un angle (θ) compris entre 8 et 20 degrés par rapport à une ligne verticale (V) s'étendant dans une direction de la hauteur (Z) du véhicule.

3. Caisse de véhicule selon la revendication 1 ou la revendication 2, dans laquelle l'organe de renfort (32) est formé par cintrage d'une seule tôle.

4. Caisse de véhicule selon l'une quelconque des revendications 1 à 3, dans laquelle une surface de contact sur laquelle le premier organe de renfort (31) et le deuxième organe de renfort (32) sont en contact l'un avec l'autre est située de manière à s'étendre parallèlement à la ligne verticale (V) s'étendant dans la direction de la hauteur (Z) du véhicule.

5. Caisse de véhicule selon l'une quelconque des revendications 1 à 4, dans laquelle une extrémité de la traverse (2) comprend une première surface de bride (41) formée sans encoches.

6. Caisse de véhicule selon l'une quelconque des revendications 1 à 5, dans laquelle la première surface de bride (41) est inclinée selon le même angle que la surface inclinée (11), et est couplée de manière à être en contact avec une surface extérieure de la surface inclinée.

7. Caisse de véhicule selon l'une quelconque des revendications 1 à 6, dans laquelle la traverse (2) comprend une paire de surfaces de paroi (43) s'étendant dans une direction de la hauteur (Z) du véhicule, et une surface de raccordement (44) raccordant une extrémité de la paire de surfaces de paroi, dans laquelle l'autre extrémité de la surface de paroi est cintrée pour former une deuxième surface de bride (42).

8. Caisse de véhicule selon la revendication 7, dans laquelle une portion en bourrelet (48), formée de manière à s'étendre dans la direction longitudinale de la traverse (2), est disposée sur la surface de raccordement (44) de la traverse, dans laquelle la profondeur ou la hauteur de la portion en bourrelet est formée pour être variable.

9. Caisse de véhicule selon l'une quelconque des revendications 1 à 8, dans laquelle une portion intermédiaire (45) et les deux extrémités de la traverse (2) sont formées de tôles de matériaux différents, puis couplées l'une à l'autre par soudage.

10. Caisse de véhicule selon la revendication 9, dans laquelle la portion intermédiaire (45) de la traverse (2) présente une résistance mécanique égale ou supérieure à la résistance mécanique des deux extrémités, et a une épaisseur inférieure ou égale à l'épaisseur des deux extrémités.

11. Caisse de véhicule selon la revendication 9 ou 10, dans laquelle, dans la portion intermédiaire (45), la portion en bourrelet (48) présente une certaine profondeur ou hauteur, et
aux deux extrémités, la profondeur de la portion en bourrelet diminue ou la hauteur de la portion en bourrelet se réduit à mesure que la distance qui la sépare de la portion intermédiaire augmente.

12. Caisse de véhicule selon l'un quelconque des revendications 1 à 11, dans laquelle le bas de caisse (1) et la traverse (2) sont réalisés en tôle formée d'acier ultra haute résistance de 780 MPa ou plus.
